# EUROPÄISCHE PATENTSCHRIFT

(11) **EP 2 555 894 B1**
(45) Veröffentlichungstag und Bekanntmachung des Hinweises auf die Patenterteilung: **21.06.2017**
(21) Anmeldenummer: 12707574.5
(22) Anmeldetag: 05.03.2012
(51) Int. Cl.: B23B 31/00, B23B 31/06, B23Q 3/12, B23B 31/107, B23B 29/04

(54) **SPANNSYSTEM ZUR LÖSBAREN VERBINDUNG ZWEIER VORZUGSWEISE ROTATIONSSYMMETRISCHER TEILE**
CLAMPING SYSTEM FOR DETACHABLE CONNECTION OF TWO PREFERABLY ROTATIONALLY SYMMETRIC PARTS
DISPOSITIF DE SERRAGE POUR LA FIXATION DÉTACHABLE DE DEUX PIÈCES DE PRÉFÉRENCE À SYMÉTRIE DE ROTATION

(30) Priorität: 03.03.2011 DE 102011005052
(43) Veröffentlichungstag der Anmeldung: 13.02.2013
(73) Patentinhaber: Gühring KG, 72458 Albstadt (DE)
(72) Erfinder: MATHEIS, Klaus, 88605 Sauldorf/Rast (DE)
(74) Vertreter: Winter, Brandl, Fürniss, Hübner, Röss, Kaiser, Polte - Partnerschaft mbB
(86) Internationale Anmeldenummer: PCT/EP2012/053742
(87) Internationale Veröffentlichungsnummer: WO 2012/117118

(56) Entgegenhaltungen:
- DE-A1-102006 055 422
- DE-A1-102007 024 552
- DE-A1-102010 013 156

## Beschreibung

Die Erfindung betrifft ein Spannsystem gemäß dem Oberbegriff des Anspruchs 1.

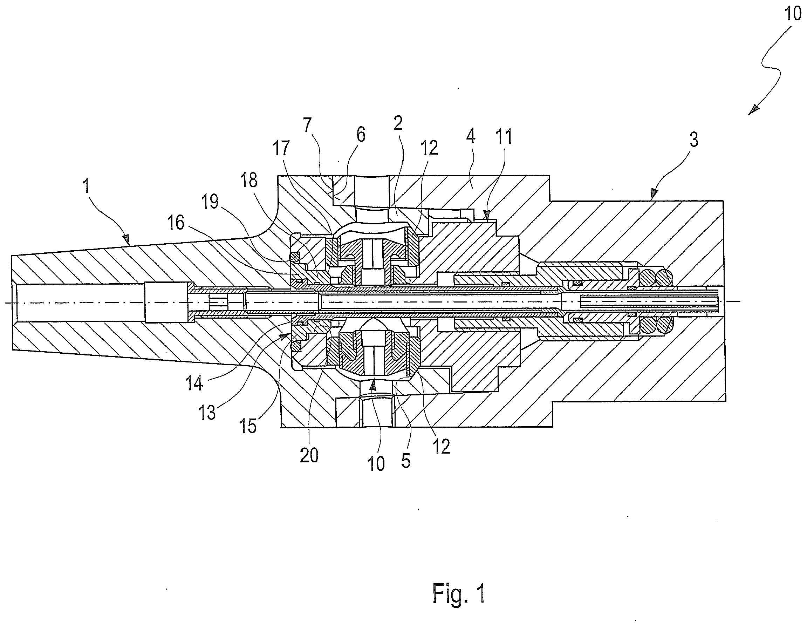

Ein derartiges Spannsystem ist in der DE 102007024552 A1 oder DE 102006055422 A1 angegeben. Fig. 1 zeigt das auch als 4-Punkt-Spannsystem bekannte Spannsystem. Das Spannsystem 10 hat die Funktion, zwei vorzugsweise rotationssymmetrische Teile, von denen ein Teil 1 einen vorzugsweise zylindrischen oder konischen Hohlschaft 2 und das andere Teil 3 einen Aufnahmeabschnitt 4 zur passgenauen Aufnahme des Hohlschafts 2 aufweist, lösbar miteinander zu verbinden. Zu diesem Zweck hat das Spannsystem 10 einen im Aufnahmeabschnitt 4 des anderen Teils 3 konzentrisch angeordneten Grundkörper 11, der sich im aneinander gefügten Zustand der beiden Teile 1, 3 in den Hohlschaft 2 des einen Teils 1 erstreckt und zwei diametral angeordnete Spannkörper 12 trägt, die diametral gegensinnig zwischen einer Lösestellung und einer Spannstellung (vgl. Fig. 1) verstellbar sind.

Bei einer Betätigung in Richtung Spannstellung laufen die beiden Spannkörper 12 auf eine im Hohlschaft 2 des einen Teils 1 vorgesehene umlaufende Keilflanke 5 auf, die von einer hinterschnittenen Spannschulter gebildet ist, wodurch der Hohlschaft des einen Teils 1 eine axial gerichtete Anpresskraft in Richtung des anderen Teils 3 erfährt und in den Aufnahmeschaft 4 des anderen Teils 3 gezogen wird, bis eine stirnseitige Radialringfläche 6 des einen Teils 1 gegen eine gegenüberliegende stirnseitige Radialringfläche 7 des anderen Teils 3 stößt. Im zusammengefügten Zustand der beiden Teile 1, 3 sorgen die beiden Spannkörper 12 nicht nur dafür, dass eine ausreichende axiale Anpresskraft erzeugt wird, sondern darüber dafür, dass der Hohlschaft 2 des einen Teils 1 eine gewisse radiale Aufweitung erfährt, durch die Passungenauigkeiten zwischen dem Hohlschaft 2 des einen Teils 1 und dem Aufnahmeabschnitt 4 des anderen Teils 3 kompensiert werden und die Ausrichtung der beiden Teile 1, 3 verbessert wird. Im zusammengefügten Zustand der beiden Teile 1, 3 ist der Hohlschaft 2 des einen Teils 1 daher mit einem Presssitz im Aufnahmeabschnitt 4 des anderen Teils 3 aufgenommen.

Bei einer Betätigung in Richtung Lösestellung werden die beiden Spannkörper 12 zwar außer Eingriff mit der hinterschnittenen Schulter im Hohlschaft 2 des einen Teils 1 gebracht. Aufgrund des Presssitzes verbleibt zwischen dem Hohlschaft 2 des einen Teils 1 und dem Aufnahmeabschnitt 4 des anderen Teils 3 jedoch eine Spannung, die ein Lösen der beiden Teile 1, 3 erschwert oder gar verhindert.

Daher hat das in den oben genannten Druckschriften angegebene Spannsystem einen Ausstoßer 13 mit der Funktion, bei einer Betätigung der beiden Spannkörper 12 in Richtung Lösestellung den Pressverbund zwischen den beiden Teilen 1, 3 zu lösen. Der Ausstoßer 13 ist dabei zweiteilig aufgebaut. Es ist im Besonderen aus einem Rohrelement 14 und einem das Rohrelement 14 umgebenden Ringelement 15 gebildet. Das Rohrelement 14 ist über eine Art Bajonettverschluss im Grundkörper 11 verankert. Das Ringelement 15 umgibt das Rohrelement 14 und wird durch das Rohrelement 14 im Grundkörper 11 in der Weise gehalten, dass es gemeinsam mit dem Rohrelement 14 für den Ausstoßvorgang um einen dem vorgenannten axialen Spiel entsprechenden Ausstoßhub axial verschiebbar ist. Bei einer Betätigung in Richtung Lösestellung laufen die Spannkörper 12 auf zwei am Ringelement vorgesehene Keilflanken 17 auf, wodurch das Ringelement 15, eine axial gerichtete Ausstoßkraft in Richtung des einen Teils 1 erfährt und das eine Teil 1 vom anderen Teil 3 weg drückt. Die eigentliche Ausstoßfunktion ist daher Sache des Ringelements 15 nicht aber auch des Rohrelements 14. Das Rohrelement 14 wird zwar vom Ringelement 15 in Ausstoßrichtung mitgenommen, es übt aber keine Ausstoßkraft auf das auszustoßende eine Teil 1 aus. Die beiden Keilflanken 17 des Ringelements 15 sind an axialen Fortsätzen 18 eines Ringkörpers 16 ausgebildet. Während der Ringkörper 16 in der zentrischen Aufnahmeöffnung 19 angeordnet ist, sind die beiden axialen Fortsätze 18 formschlüssig in zwei diametral gegenüberliegenden, axialen Mitnehmernuten 20 im Grundkörper 11 aufgenommen. Die formschlüssige Aufnahme der beiden axialen Fortsätze 18 in den Mitnehmernuten 20 verhindert eine Verdrehung des Ringelements 15 im Grundkörper 11, gewährleistet zugleich aber die zum Ausstoßen erforderliche axiale Verschiebbarkeit des Ringelements 15.

Das in denn oben genannten Druckschriften angegebene Spannsystem 10 hat sich zwar in funktionaler Hinsicht bewährt. Es ist aber in fertigungstechnischer Hinsicht noch verbesserungswürdig. Während die zentrische Aufnahmeöffnung 16 zur Aufnahme des Ringkörpers 16 in fertigungstechnischer Hinsicht durch eine einfach zu bewerkstelligende Bohrbearbeitung hergestellt werden können, erfordert die Ausbildung der beiden exzentrischen Mitnehmernuten 20 zur Aufnahme der beiden axialen Fortsätze 18 eine zusätzliche Fräsbearbeitung des Grundkörpers 11. Die zusätzliche Fräsbearbeitung des Grundkörpers 11 wie auch der zweiteilige Aufbau des Ausstoßers 13 aus dem Rohrelement 14 und dem Ringelement 15 erhöhen den fertigungstechnischen Aufwand und damit die Herstellkosten des Spannsystems insgesamt. Daneben erfordert der Zusammenbau des Ausstoßers 13 wie auch dessen Einbau in den Grundkörper 11 Zeit und technisches Geschick.

Ausgehend von dem eingangs diskutierten Stand der Technik, d.h. dem in Fig. 1 veranschaulichten Spannsystem, liegt der Erfindung die Aufgabe zugrunde, ein Spannsystem, insbesondere ein für die MMS (Minimalmengeschmierung)-Technologie taugliches 4-Punkt-Spannsystem, zu schaffen, das sich durch einen in fertigungs- und montagetechnisch vereinfachten, funktionsfähigen Aufbau auszeichnet.

Diese Aufgabe wird durch ein Spannsystem mit den Merkmalen des Anspruchs 1 gelöst. Bevorzugte Weiterbildungen sind Gegenstand abhängiger Ansprüche.

Das erfindungsgemäße Spannsystem hat die Funktion, zwei vorzugsweise rotationssymmetrische Teile, von denen ein Teil einen vorzugsweise zylindrischen oder konischen Hohlschaft und das andere Teil einen Aufnahmeabschnitt zur passgenauen Aufnahme des Hohlschafts aufweist, lösbar miteinander zu verbinden. Zu diesem Zweck hat das erfindungsgemäße Spannsystem einen im Aufnahmeabschnitt des anderen Teils konzentrisch anzuordnenden Grundkörper, der sich im aneinander gefügten Zustand der beiden Teile in den Hohlschaft des einen Teils erstreckt. Der Grundkörper trägt zwei Spannkörper, die diametral gegensinnig zwischen einer Lösestellung und einer Spannstellung betätigbar sind. In einer zentrischen Durchgangsbohrung im Grundkörper ist des Weiteren ein um einen definierten Ausstoßhub axial verstellbar gehaltener Ausstoßer angeordnet. In der Spannstellung beaufschlagen die beiden Spannkörper das eine Teil mit einer in eine Anpressrichtung zum anderen Teil hin wirkenden Anpresskraft. In der Lösestellung beaufschlagen die beiden Spannkörper dagegen das eine Teil über den Ausstoßer mit einer in eine Ausstoßrichtung von dem anderen Teil weg wirkenden Ausstoßkraft.

Das erfindungsgemäße Spannsystem zeichnet sich gegenüber dem eingangs diskutierten Stand der Technik dadurch aus, dass der Ausstoßer aus einem Rotationskörper gebildet ist, der unmittelbar mit einem dem definierten Ausstoßhub entsprechenden axialen Spiel in einer im Grundkörper ausgebildeten zentrischen Durchgangsbohrung lösbar verankert ist.

Im Unterschied zu dem Ringelement des eingangs diskutierten Standes der Technik handelt es sich bei dem Rotationskörper um einen rotationssymmetrischen länglichen Körper, z. B. ein Drehteil, mit einer im Vergleich zum Ringelement größeren axialen Länge. Im Sinne einer MMS-tauglichen Lösung ist der Rotationskörper vorzugsweise ein Hülsenkörper, da dieser eine zentrische Kühl-/Schmiermittelzufuhr gestattet. Der Rotationskörper hat zumindest abschnittsweise eine zylindrische Außenumfangsfläche, die den Ausstoßer in der zentrischen Durchgangsbohrung im Grundkörper in axialer Richtung führt. Die zentrische Durchgangsbohrung lässt sich ohne besondere technische Schwierigkeiten in herkömmlicher Weise durch maschinelle spanende Bearbeitung um bzw. entlang der Längsmittelachse des Grundkörpers herstellen. Die maschinelle spanende Bearbeitung umfasst beispielsweise eine Bohr- und Innendrehbearbeitung. So kann beispielsweise in einem ersten Schritt zunächst eine zentrische Bohrung entlang der Längsmittelachse des Grundkörpers angefertigt werden, die anschließend in einem zweiten Schritt durch eine Innendrehbeabeitung nachbearbeitet wird. Mit der Bezeichnung "Durchgangsbohrung" wird daher nicht streng auf das Ergebnis einer ausschließlichen Bohrbearbeitung abgestellt. Vielmehr sind auch Ergebnisse kombinierter Bearbeitungen, insbesondere der oben diskutierten Bohr- und Drehbearbeitung, von der Bezeichnung "Durchgangsbohrung" umfasst. Die Durchgangsbohrung weist jedoch zumindest abschnittsweise eine zylindrische Innenumfangsfläche auf, die den aus dem Rotationskörper gebildeten Ausstoßer in axialer Richtung führt.

Im Unterschied zu dem eingangs diskutierten Stand der Technik, bei dem das den eigentlichen Ausstoßer bildende Ringelement nur mittelbar über das im Grundköper verankerte Rohrelement gehalten wird, ist bei dem erfindungsgemäßen Spannsystem der Ausstoßer selbst in der zentrischen Durchgangsbohrung im Grundkörper verankert. Die Verankerung ist durch einen Formschluss, beispielsweise nach dem Vorbild des eingangs diskutierten Standes der Technik in der Art eines Bajonettverschlusses, realisiert. In jedem Fall kann der Ausstoßer im Bereich eines größeren Durchmessers formschlüssig mit dem Grundkörper verbunden sein als das im Ringelement angeordnete Rohrelement des eingangs diskutierten Standes der Technik.

Da gegenüber dem eingangs diskutierten Stand der Technik lediglich der Ausstoßer und was den Grundkörper betrifft, im Grunde nur derjenige Teil, in dem der Ausstoßer aufgenommen ist und der mit dem Ausstoßer zusammenwirkt, modifiziert sind, gestattet das erfindungsgemäße Spannsystem die Verwendung aller weiteren Spannsystemkomponenten, wie z.B. der beiden Spannkörper und einer die beiden Spannkörper antreibenden Differentialgewindespindel. Das erfindungsgemäße Spannsystem erfordert daher in montage- oder bedienungstechnischer Hinsicht kein größeres Umdenken im Vergleich zu dem eingangs diskutierten Stand der Technik.

In einer bevorzugten Weiterbildung weist der Ausstoßer in Anpressrichtung einen axialen Fortsatz auf, der aus einem durch Abtragung, beispielsweise durch Fräsen oder Schleifen, zweier, in einer axialen Draufsicht kreissegmentförmiger Abschnitte des Rotationskörpers erhaltenen Stegabschnitt gebildet ist. An der zylindrischen Außenumfangsfläche des Stegabschnitts sind zwei diametral gegenüberliegende Nuten eingearbeitet, die mit in der zentrischen Durchgangsbohrung diametral gegenüberliegend angeordneten Radialvorsprüngen in Eingriff bringbar sind. Die beiden Nuten im Stegabschnitt können in einem einzigen Arbeitsschritt, beispielsweise durch Außendrehen, ausgebildet werden. Da der axiale Fortsatz an dem Rotationskörper ausgebildet wird, liegt dessen zylindrische Außenumfangsfläche in axialer Richtung betrachtet in der Hüllfläche des Rotationskörpers. Im Vergleich zu dem Ringelement des eingangs diskutierten Standes der Technik hat der Ausstoßer des erfindungsgemäßen Spannsystems daher keine in radialer Richtung über die Hüllfläche des Rotationskörpers hinausragenden, exzentrischen Abschnitte gibt, für die im Grundkörper in zusätzlichen Arbeitsschritten Mitnehmernuten einzufräsen wären.

Die in Richtung der Längsmitttelachse gemessene Breite der Nuten am Stegabschnitt des Ausstoßers ist dabei vorzugsweise gerade so groß ausgelegt, dass die von der Innenumfangsfläche der zentrischen Durchgangsbohrung radial nach innen vorspringenden Radialvorsprünge in den Nuten mit einem dem definierten Ausstoßhub entsprechenden axialen Spiel aufgenommen sind. In diesem Fall wird erreicht, dass der Ausstoßer in der Lösestellung von den beiden Spannkörpern in Ausstoßrichtung gegen die beiden Radialvorsprünge gepresst wird. In der Lösestellung der beiden Spannkörper lässt sich daher der Ausstoßer nur mehr mit einem erheblichen Kraftaufwand entriegeln. Es wird daher sichergestellt, dass sich der Ausstoßer in der Lösestellung der beiden Spannkörper nicht ungewollt entriegeln kann.

Das aufgrund der axialen Verschiebbarkeit des Ausstoßers erforderliche axiale Spiel, mit dem die beiden Radialvorsprünge in der zentrischen Durchgangsbohrung in den Nuten am axialen Fortsatz des Ausstoßers aufgenommen sind, ist vorzugsweise als eine enge Spielpassung ausgelegt. Anders ausgedrückt ist der Ausstoßer in der zentrischen Durchgangsbohrung passgenau aufgenommen. Zur zusätzlichen Abdichtung kann zwischen dem Ausstoßer und der zentrischen Durchgangsbohrung ferner ein umlaufender Dichtring angeordnet sein. Zu diesem Zweck kann in die Außenumfangsfläche des Ausstoßers oder in die Innenumfangsfläche der zentrischen Durchgangsbohrung eine umlaufende Dichtringnut eingearbeitet sein, in der der Dichtring sitzt.

Des Weiteren kann der Ausstoßer eine in Anpressrichtung weisende umlaufende Keilflanke aufweisen, gegen die die beiden Spannkörper bei einer Betätigung in Richtung Lösestellung auflaufen. Die beiden Spannkörper können entsprechende Keilflächen aufweisen. In dieser Weiterbildung werden die beiden Spannkörper, wenn sie radial nach innen bewegt werden, mit der umlaufenden Keilflanke zum Bestandteil eines Keilgetriebes.

In einer bevorzugten Weiterbildung sind die beiden Spannkörper formschlüssig in zwei diametral gegenüberliegenden Ausnehmungen im Grundkörper aufgenommen, die sich radial soweit nach innen erstrecken, dass sie die zentrische Durchgangsbohrung über die gesamte axiale Länge der beiden Ausnehmungen freilegen.

Der Ausstoßer kann des Weiteren an seinem in Ausstoßrichtung liegenden Ende einen umlaufenden Flansch haben. Der Flansch ist vorzugsweise so ausgelegt, dass er bei einer Betätigung der beiden Spannkörper in Richtung der Spannstellung in einer im Grundkörper ausgebildeten stirnseitigen Aufnahmeöffnung vollständig eintaucht und bei einer Betätigung der beiden Spannkörper in Richtung der Lösestellung um den definierten Ausstoßhub aus der stirnseitigen Aufnahmeöffnung ausfährt.

Im Sinne einer für die MMS-Technologie tauglichen Weiterbildung ist der Ausstoßer mit einem im Grundkörper zentrisch angeordneten Kühl-/Schmiermittelzufuhrrohr kombiniert. Das Kühl-/Schmiermittelzufuhrrohr kann mit dem Ausstoßer, beispielswise als ein Drehteil, einstückig ausgebildet oder einstückig handhabbar verbunden sein. In letzterem Fall ist das Kühl-/Schmiermittelzufuhrrohr vom Ausstoßer, der hier als ein Hülsenkörper ausgebildet ist, getrennt ausgebildet und vorzugsweise mit einem Presssitz im Hülsenkörper eingesetzt. Diese Weiterbildung gewährleistet, dass der Ausstoßer das Rohrelement bei einer Dreh- und Axialbwegung, also bei der Montage und bei einer Ausstoßbewegung mitnimmt, wodurch die Montage vereinfacht und im Einsatz des Spannsystems eine Unterbrechung der Kühl-/Schmiermittelzufuhr von vornherein verhindert wird.

Der Ausstoßer hat vorzugsweise an seinem in Anpressrichtung liegenden Ende eine zentrische Werkzeugaufnahmeaussparung, beispielsweise eine Innensechskantausnehmung, aufweist, die den Einsatz eines entsprechenden Montagewerkzeugs, z. B. Inbusschlüssels, gestattet.

Nachstehend wird anhand schematischer Zeichnungen eine bevorzugte Ausführungsform des erfindungsgemäßen Spannsystems näher erläutert.
Fig. 1 zeigt einen Längsschnitt einer aus der DE 102007024552 A1 oder DE 102006055422 A1 bekannten Verbindung zweier Teile mit Hilfe eines gattungsgemäßen Spannsystems.
Fig. 2 zeigt einen Längsschnitt eines erfindungsgemäßen Spannsystems.
Fig. 3 zeigt einen Längsschnitt des erfindungsgemäßen Spannsystems aus Fig. 2 in einer um 90° um die Längsmittelachse gedrehten Lage.
Fig. 4 zeigt eine Vorderansicht des erfindungsgemäßen Spannsystems aus Fig. 2.
Fig. 5 zeigt in perspektivischer Ansicht einen Längsschnitt eines Grundkörpers des erfindungsgemäßen Spannsystems.
Fig. 6 und 7 zeigen in perspektivischer Ansicht zwei Seitenansichten einer Ausstoßer-Kühl-/Schmiermittelzufuhrrohr-Einheit des erfindungsgemäßen Spannsystems.

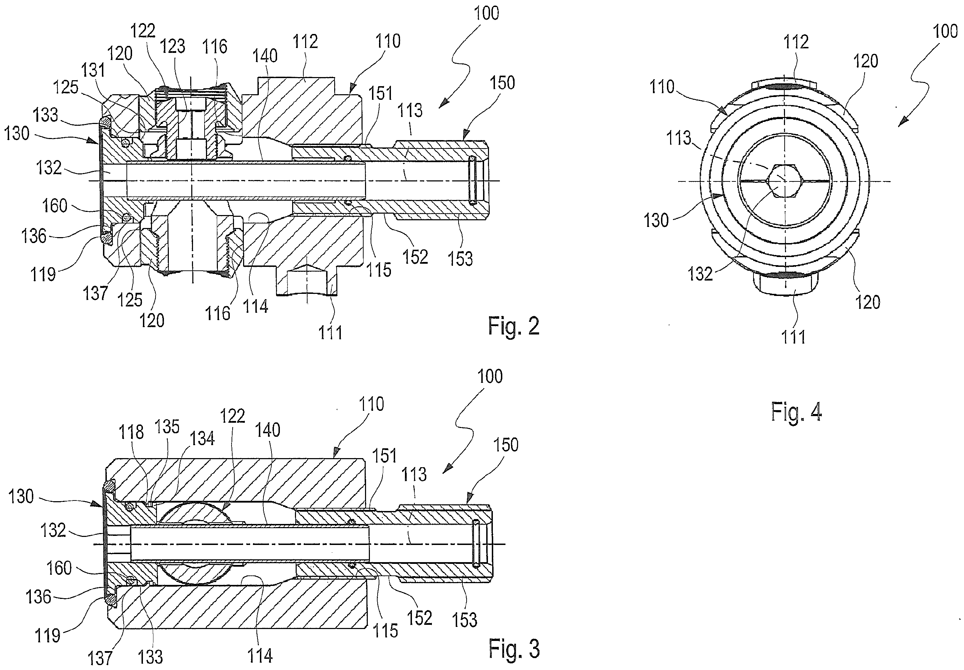

Mit Hilfe der Fig. 2 bis 7 wird im Folgenden eine bevorzugte Ausführungsform eines erfindungsgemäßen Spannsystems beschrieben.

In der bevorzugten Ausführungsform ist das erfindungsgemäße Spannsystem als ein 4-Punkt-Spannsatz ausgebildet. Analog dem in Fig. 1 gezeigten System hat es die Funktion zwei vorzugsweise rotationssymmetrische Teile axial aneinanderzuklammern. Der Aufbau der beiden zu verbindenden Teile wie auch das Zusammenwirken des erfindungsgemäßen Spannsystems mit den beiden zu verbindenden Teilen ergibt sich aus Fig. 1 und bedarf daher keiner weiteren Erläuterung.

Das in den Fig. 2 bis 6 gezeigte erfindungsgemäße Spannsystem 100 hat einen Grundkörper 110, der zwei Spannkörper 120 trägt, die mittels eines Antriebsmittels, das in der bevorzugten Ausführungsform als eine Differentialgewindespindel 122 ausgestaltet ist, diametral gegensinnig zwischen einer nicht gezeigten Lösestellung und der in Fig. 2 gezeigten Spannstellung verstellbar sind. Neben den beiden Spannkörpern 120 und der Differentialgewindespindel 122 ist im Grundkörper 110 ein mit einem Rohrelement 140 kombinierter Ausstoßer 130 angeordnet.

Der Grundkörper 110 ist aus einem Rotationskörper gebildet. Er trägt außenumfangsseitig zwei einstückig angeformte Mitnehmerkörper 111, 112, die diametral gegenüberliegend angeordnet sind. Die Mitnehmerkörper 111, 112 dienen zur formschlüssigen Verankerung des Grundkörpers 110 in dem in Fig. 1 gezeigten Teil 3. Im Grundkörper 110 ist eine sich entlang einer Längsmittelachse 113 verlaufende zentrische Durchgangsbohrung 114 ausgebildet. Die zentrische Durchgangsbohrung 114 kann durch eine Bohr- und Drehbearbeitung erzeugt werden. In einem ersten Schritt wird zunächst eine zentrische Bohrung angefertigt werden, die anschließend in einem zweiten Schritt durch Innendrehen in der Weise nachbearbeitet wird, dass zwei diametral gegenüberliegende Radialvorsprünge 118 entstehen, die zur Verankerung des Ausstoßers 130 dienen, was an späterer Stelle erläutert wird. Die zentrische Durchgangsbohrung 130 geht auf der den Mitnehmerkörpern 111, 112 zugewandten Seite in eine Gewindebohrung 115 über. Die Gewindebohrung 115 ist an einen ersten Gewindeabschnitt 151 eines als Differentialgewindebolzens 150 ausgebildeten Verbindungsstücks angepasst, der durch eine Eindrehung 152 vom ersten Gewindeabschnitt 151 getrennt einen zweiten Gewindeabschnitt 153 trägt, dessen Gewinde gleichsinnig zum Gewinde des ersten Gewindeabschnitts 151, jedoch mit größerer Steigung ausgebildet ist. Der zweite Gewindeabschnitt 153 ist in eine entsprechende Gewindebohrung auf der Seite des Teils 3 einschraubbar, um das Spannsystem 100 mit dem Teil 3 zu verbinden. In dem von den beiden Mitnehmerkörpern 111, 112 abgewandten Endabschnitt der zentrischen Durchgangsbohrung 114 ist der Ausstoßer 130 angeordnet, wie es in Fig. 2, 3 gezeigt ist. Der Ausstoßer 130 wird an späterer Stelle ausführlich erläutert.

In einem in axialer Richtung mittleren Abschnitt ist der Grundkörper 110 mit zwei einander diametral gegenüberliegenden Ausnehmungen 116 zur formschlüssigen Aufnahme der beiden Spannkörper 120 ausgestattet. Die Anordnung ist derart getroffen, dass die beiden Spannkörper 120 über ihre Stirnseiten von den Seitenflächen der Ausnehmungen 116 passungsgenau geführt und diametral gegensinnig beweglich im Gehäusekörper 110 gehalten sind. Die Spannkörper 120 sind im Besonderen von im Querschnitt linsenförmig ausgebildeten Körpern gebildet. Die Ausnehmungen 116 im Gehäusekörper 110 sind in radialer Richtung so tief ausgebildet, dass die Spannkörper 120 in den Ausnehmungen 116 vollständig versenkbar sind. Zu diesem Zweck entspricht die Krümmung der Außenfläche der beiden Spannkörper 120 im Wesentlichen der Krümmung der zylindrischen Außenfläche des Grundkörpers 110. Die Innenflächen der beiden Spannkörper 120 sind analog den Grundflächen der beiden Ausnehmungen 116 als Planflächen ausgebildet. Die Ausnehmungen 116 sind darüber hinaus in radialer Richtung so tief ausgebildet, dass sie zentrische Durchgangsbohrung 114 soweit freilegen, dass die in den Ausnehmungen 116 angeordneten Spannkörper 120 in der nicht gezeigten Lösestellung in die zentrische Durchgangsbohrung 114 eingreifen und den Ausstoßer 130 in Fig. 2 und 3 nach links, d. h. in Ausstoßrichtung, verdrängen.

Die Spannkörper 120 sind jeweils mit radialen Gewindebohrungen 122 ausgestattet, in die die Differentialgewindespindel 122 eingeschraubt ist. Die Differentialgewindespindel 122, der Aufbau und Funktionsweise aus dem eingangs diskutierten Stand der Technik bekannt ist, ist in einer im Grundkörper 110 ausgebildeten Querbohrung 117 angeordnet, die wie es in Fig. 4 gut zu erkennen ist, die zentrische Durchgangsbohrung 114 schneidet. Über eine Innensechskantausnehmung 123 ist die Differentialgewindespindel 122 mittels eines radial von außen einsteckbaren Schlüssels in der Weise antreibbar, die Diffferentialgewindespindel 122 die beiden Spannkörper 120 je nach Drehrichtung des Schlüssels gegensinnig entweder diametral nach außen in die in Fig. 2 gezeigte Spannstellung oder diametral nach innen in die Lösestellung bewegt.

Wie sich aus den Fig. 2, 3 und 5 ergibt, erstrecken sich die beiden Ausnehmungen 116 radial soweit nach innen bzw. sind so tief ausgebildet, dass die zentrische Durchgangsbohrung 113 im Wesentlichen über die gesamte axiale Länge der beiden Ausnehmungen 120 über diese radial zugänglich wird. Die Grundflächen der beiden Ausnehmungen 120 sind daher jeweils von zwei bezüglich der Längsmittelachse 113 seitlich angeordneten Teilflächen gebildet, von denen die eine in Fig. 4 gut zu erkennen ist. Bei einer Betätigung der beiden Spannkörper 120 in Richtung der Lösestellung dringen die beiden Spannkörper 120 daher in die zentrische Durchgangsbohrung 114 ein und laufen auf den in der zentrischen Durchgangsbohrung 114 angeordneten Ausstoßer 130 auf.

Zu diesem Zweck weisen die beiden Spannkörper 120 an ihren dem Ausstoßer 130 zugewandten Stirnseiten jeweils eine Keilfläche 125 auf, die sich bei einer Betätigung der beiden Spannkörper 120 in Richtung der Lösestellung an einer am Ausstoßer 130 vorgesehenen umlaufenden Keilflanke 131 abstützt. Die beiden Spannkörper 120 werden daher, wenn sie radial nach innen bewegt werden, mit der umlaufenden Keilflanke 131 am Ausstoßer 130 zum Bestandteil eines Keilgetriebes.

Der Ausstoßer 130 ist aus einem in der zentrischen Durchgangsbohrung 114 passgenau angeordneten zylindrischen Hülsenkörper gebildet. Die vorgenannte umlaufende Keilflanke 131 ist auf der den beiden Spannkörpern 120 zugewandten Stirnseite des Ausstoßers 130 vorgesehen, wie es in Fig. 2, 3 und 7 zu sehen ist. Bei dem Hülsenkörper handelt es sich um einen rotationssymmetrischen länglichen Hohlkörper, beispielsweise um ein Drehteil, mit einer zumindest abschnittsweise rotationssymmetrischen, vorzugsweise zylindrischen Außenumfangsfläche 133, die eine verkantungsfreie Führung des Ausstoßers 130 in der zentrischen Durchgangsbohrung 130 gewährleistet.

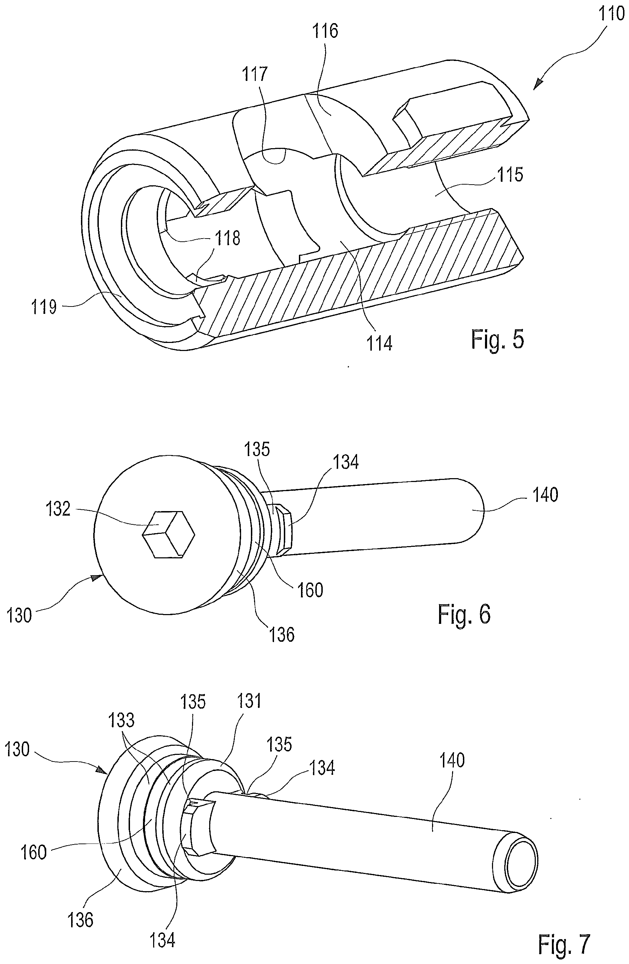

Der Ausstoßer 130 ist in der zentrischen Durchgangsbohrung 114 im Grundkörper 110 formschlüssig, allerdings mit einem für einem dem gewünschten Ausstoßhub entsprechenden axialen Spiel verankert. Die Verankerung wird im Besonderen über eine Art Bajonettverschluss erreicht. Hierzu weist der Ausstoßer gemäß Fig. 6 und 7 an seiner in Anpressrichtung liegenden Stirnseite einen axialen Fortsatz 133 auf, der aus einem durch Abtragung zweier, in einer axialen Draufsicht kreissegmentförmiger Abschnitte erhaltenen Stegabschnitt 134 gebildet ist. An der zylindrischen Außenumfangsfläche des Stegabschnitts 134 sind zwei diametral gegenüberliegende Nuten 135 ausgebildet, die mit in der zentrischen Durchgangsbohrung 114 vorgesehenen Radialvorsprüngen 118, die in Fig. 3 und 4 zu erkennen sind, in Eingriff bringbar sind. Fig. 3 zeigt, dass der axiale Fortsatz 133 in den Hülsenkörper eingearbeitet ist. Die zylindrischen Hüllfläche des axialen Fortsatzes 133 fluchtet daher mit der zylindrischen Hüllfläche desjenigen Abschnitts mit der zylindrischen Außenumfangsfläche 133 des Ausstoßers 130.

Die in Richtung der Längsmittelachse 113 des Grundkörpers 110 gemessene Breite der Nuten 135 ist dabei gerade so groß ausgelegt, dass die von der Innenumfangsfläche der zentrischen Durchgangsbohrung 113 vorspringenden Radialvorsprünge 118 mit einem genau dem gewünschten Ausstoßhub entsprechenden axialen Spiel in den Nuten 135 aufgenommen sind. Dadurch wird der Ausstoßer 130 in der Lösestellung der beiden Spannkörper 122 in Ausstoßrichtung gegen die Radialvorsprünge 118 gepresst.

Der Ausstoßer 130 ist des Weiteren an seinem in Ausstoßrichtung liegenden Ende flanschartig radial nach außen ausgedehnt. Der Flansch 136 ist so ausgelegt, dass er bei einer Betätigung der beiden Spannkörper 120 in Richtung der Spannstellung in einer im Grundkörper 110 ausgebildeten stirnseitigen Aufnahmeöffnung 119 vollständig eintaucht und bei einer Betätigung der beiden Spannkörper 120 in Richtung der Lösestellung um den gewünschten Ausstoßhub aus der stirnseitigen Aufnahmeöffnung 119 ausfährt.

Der Ausstoßer 130 hat weiter an seinem in Anpressrichtung liegenden Ende eine zentrische Innensechskantausnehmung 132, die den Einsatz eines entsprechenden Montagewerkzeugs, z. B. Inbusschlüssels, zur Verankerung des Hülsenkörpers 132 im Grundkörper 110 gestattet.

Fig. 5 und 6 zeigen, dass der Ausstoßer 130 mit einem die zentrische Durchgangsbohrung 114 konzentrisch durchdringenden Kühl-/Schmiermittelzufuhrrohr 140 kombiniert ist. Das Kühl-/Schmiermittelzufuhrrohr 140 ist in der gezeigten Ausführungsform mit dem Ausstoßer 130 einstückig ausgebildet. Alternativ dazu kann es aber auch in der zentrischen Bohrung des aus dem Hülsenkörper gebildeten Ausstoßers 130 mit einem Presssitz angeordnet sein, wodurch es vom Ausstoßer 130 in axialer Richtung und in Drehrichtung um die Längsmittelachse 113 mitgenommen wird. Auf der dem Ausstoßer 130 abgewandten Seite ist das Kühl-/Schmiermittelzufuhrrohr 140 passgenau in einer zentrischen Bohrung des oben erwähnten Differentialgewindebolzens 150 aufgenommen.

Der Ausstoßer 130 hat darüber hinaus an seiner zylindrischen Außenumfangsfläche 133 eine umlaufende Ringnut 137, in der ein Dichtring 160 aufgenommen ist.

Die Fig. 2 und 3 zeigen das Spannsystem in einem vormontierten Zustand, der wie folgt erreicht werden kann: Zunächst wird in die Querbohrung 117 die Differentialgewindespindel 122 eingesetzt, auf der zuvor bereits einer der beiden Spannkörper 120 aufgesetzt wurde. Anschliessend kann der andere der beiden Spannkörper 120 auf der gegenüberliegenden Seite auf die Differentialgewindespindel 122 aufgesetzt und durch Drehen der Differentialgewindespindel 122 auf diese geschraubt werden. Durch ein weiteres Drehen kann die Differentialgewindespindel 122 synchron soweit in beide Spannkörper 122 eingeschraubt werden, bis die beiden Spannkörper 122 am Grundkörper 110 sicher gehalten werden. In diesem Zustand kann dann der Differentialgewindebolzen 150 in den Grundkörper 110 eingeschraubt werden. Anschließend kann der mit dem Rohrelement 140 kombinierte Ausstoßer 130 in die zentrische Durchgangsbohrung 114 eingesetzt und in eine Drehlage gebracht werden, in der der axiale Fortsatz 133 zwischen die beiden Radialvorsprünge 118 passieren kann. Dabei taucht das Rohrelement 140 in den im Grundkörper 110 eingeschraubten Differentialgewindebolzen 150 und der Flansch 136 in die im Grundkörper 110 ausgebildete stirnseitige Aufnahmeöffnung 119 ein. In der in Fig. 2 und 3 gezeigten Lage, in der der Flansch 136 an der Grundfläche der Aufnahmeöffnung 119 anliegt, kann der Ausstoßer 130 mit dem Rohrelement 140 um etwa 90° verdreht werden, um die Radialvorsprünge 118 in Eingriff mit den beiden Nuten 135 am axialen Fortsatz 133 zu bringen. In diesem Zustand können die beiden Spannkörper 120 durch ein weiteres Einschrauben der Differentialgewindespindel 122 in die Lösestellung gebracht, womit das erfindungsgemäße Spannsystem für die Montage in den Aufnahmeabschnitt 4 des in Fig. 1 gezeigten Teils 2 bereit steht.

## Patentansprüche

1. Spannsystem zur lösbaren Verbindung zweier vorzugsweise rotationssymmetrischer Teile (1, 3), von denen ein Teil (1) einen vorzugsweise zylindrischen oder konischen Hohlschaft (2) und das andere Teil (3) einen Aufnahmeabschnitt (4) zur passgenauen Aufnahme des Hohlschafts (2) aufweist, mit:
einem im Aufnahmeabschnitt (4) des anderen Teils (3) konzentrisch anzuordnenden Grundkörper (110), der sich im aneinander gefügten Zustand der beiden Teile (1, 3) in den Hohlschaft (2) des einen Teils (1) erstreckt und zwei Spannkörper (120, 120) trägt, die diametral gegensinnig zwischen einer Lösestellung und einer Spannstellung betätigbar sind, und
einem in einer zentrischen Durchgangsbohrung (114) im Grundkörper (110) um einen definierten Ausstoßhub axial verstellbar gehaltenen Ausstoßer (130),
wobei die beiden Spannkörper (120, 120) in der Spannstellung das eine Teil (1) mit einer in eine Anpressrichtung zum anderen Teil (3) hin wirkenden Anpresskraft beaufschlagen und in der Lösestellung das eine Teil (1) über den Ausstoßer (130) mit einer in eine Ausstoßrichtung von dem anderen Teil (3) weg wirkenden Ausstoßkraft beaufschlagen, und
wobei der Ausstoßer (130) aus einem Rotationskörper gebildet ist, der eine in Anpressrichtung weisende umlaufende Keilflanke (131) aufweist, auf die die beiden Spannkörper (120) bei einer Betätigung in Richtung der Lösestellung auflaufen, **dadurch gekennzeichnet, dass**
der den Ausstoßer (130) bildende Rotationskörper unmittelbar formschlüssig mit einem dem definierten Ausstoßhub entsprechenden axialen Spiel in einer im Grundkörper (110) ausgebildeten zentrischen Durchgangsbohrung (114) lösbar verankert ist.

2. Spannsystem nach Anspruch 1, **dadurch gekennzeichnet, dass** der Ausstoßer (130) aus einem Hülsenkörper gebildet ist.

3. Spannsystem nach Anspruch 1 oder 2, **dadurch gekennzeichnet, dass** der Ausstoßer (130) in der Art eines Bajonettverschlusses im Grundkörper (110) verankert ist.

4. Spannsystem nach Anspruch 3, **dadurch gekennzeichnet, dass**
der Ausstoßer (130) in Anpressrichtung einen axialen Fortsatz (133) aufweist, der aus einem durch Abtragung zweier, in einer axialen Draufsicht kreissegmentförmiger Abschnitte des Rotationskörpers erhaltenen Stegabschnitt (134) gebildet ist, und
der Stegabschnitt (134) zwei diametral gegenüberliegende Nuten (135) aufweist, die mit in der zentrischen Durchgangsbohrung (114) vorgesehenen, diametral gegenüberliegend angeordneten Radialvorsprüngen (118) in Eingriff bringbar sind.

5. Spannsystem nach Anspruch 4, **dadurch gekennzeichnet, dass** die Nuten (135) am Stegabschnitt (134) in axialer Richtung gerade so groß ausgelegt sind, dass die Radialvorsprünge (118) in der zentrischen Durchgangsbohrung (113) in den Nuten (135) mit einem dem definierten Ausstoßhub entsprechenden axialen Spiel aufgenommen sind.

6. Spannsystem nach einem der vorhergehenden Ansprüche, **dadurch gekennzeichnet, dass**
die beiden Spannkörper (120) in zwei diametral gegenüberliegenden Ausnehmungen (116) im Grundkörper (110) formschlüssig aufgenommen sind, und
die beiden Ausnehmungen (116) sich radial soweit nach innen erstrecken, dass sie die zentrische Durchgangsbohrung (114) freilegen.

7. Spannsystem nach einem der vorhergehenden Ansprüche, **dadurch gekennzeichnet, dass** der Ausstoßer (130) an seinem in Ausstoßrichtung liegenden Ende einen umlaufenden Flansch (136) aufweist.

8. Spannsystem nach Anspruch 7, **dadurch gekennzeichnet, dass** der Flansch (136) so ausgelegt ist, dass er bei einer Betätigung der beiden Spannkörper (120) in Richtung der Spannstellung in einer im Grundkörper (130) ausgebildeten stirnseitigen Aufnahmeöffnung (119) eintaucht und bei einer Betätigung der beiden Spannkörper (120) in Richtung der Lösestellung um den definierten Ausstoßhub aus der stirnseitigen Aufnahmeöffnung (119) ausfährt.

9. Spannsystem nach einem der vorhergehenden Ansprüche, **gekennzeichnet durch** ein mit dem Ausstoßer (130) kombiniertes Kühl-/Schmiermittelzufuhrrohr (140).

10. Spannsystem nach Anspruch 9, **dadurch gekennzeichnet, dass** das Kühl-/Schmiermittelzufuhrrohr (140) mit dem Ausstoßer (130) einstückig ausgebildet ist.

11. Spannsystem nach Anspruch 9, **dadurch gekennzeichnet, dass** das Kühl-/Schmiermittelzufuhrrohr (140) mit dem Ausstoßer (130) einstückig handhabbar verbunden ist.

12. Spannsystem nach einem der vorhergehenden Ansprüche, **dadurch gekennzeichnet, dass** der Ausstoßer (130) an seiner in Anpressrichtung weisenden Stirnseite eine Werkzeugaufnahmeaussparung (132) zur Aufnahme eines entsprechenden Werkzeugs aufweist.

## Claims

1. A clamping system for detachably connecting two preferably rotationally symmetrical parts (1, 3) of which one part (1) exhibits a preferably cylindrical or conical hollow shaft (2), and the other part (3) exhibits a receiving portion (4) for receiving the hollow shaft (2) with a precise fit, the system comprising:
a main body (110) configured to be concentrically arranged in the receiving portion (4) of the other part (3), the main body being configured to extend into the hollow shaft (2) of the one part (1) when the two parts (1, 3) are joined together, and bearing two clamping bodies (120, 120) operable in a diametrically opposed manner between a release position and a clamping position; and
an ejector (130) held so as to be axially adjustable by a defined ejection stroke in a centric through-bore (114) of the main body (110),
the two clamping bodies (120, 120) configured to subject the one part (1) to a pressing force acting in a pressing direction toward the other part (3) when the two clamping bodies are in the clamping position, and, in the release position, configured to subject the one part (1) to an ejection force acting in an ejection direction away from the other part (3) by way of the ejector (130), and
the ejector (130) exhibits a continuous wedge flank (131) pointing in the pressing direction, the two clamping bodies (120) running up against the continuous wedge flank in case of an activation in the release position direction.
**characterized in that**
the rotating body forming the ejector (130) is detachably anchored directly positively in a centric through-bore (114) formed in the main body (110) with axial play corresponding to the defined ejection stroke.

2. The clamping system in accordance with claim 1, **characterized in that** the ejector (130) is formed of a sleeve body.

3. The clamping system in accordance with claim 1 or 2, **characterized in that** the ejector (130) is anchored in the main body (110) as a bayonet coupling.

4. The clamping system in accordance with claim 3, **characterized in that**
the ejector (130) exhibits an axial extension (133) in the pressing direction, the axial extension being created by a web portion (134) received by cutting two sections of the rotating body that are shaped like a circular segment as viewed axially from above, and
the web portion (134) exhibits two diametrically opposed grooves (135) that are engageable with radial projections (118) situated diametrically opposite in the centric through-bore (114).

5. The clamping system in accordance with claim 4, **characterized in that** the grooves (135) on the web portion (134) in the axial direction are configured to be just large enough for the radial projections (118) in the centric through-bore (114) to be accommodated in the grooves (135) with an axial play corresponding to the defined ejection stroke.

6. The clamping system in accordance with any of the preceding claims,
**characterized in that**
the two clamping bodies (120) are positively accommodated in two diametrically opposing recesses (116) in the main body (110), and
the two recesses (116) extend radially inward to such an extent as to expose the centric through-bore (114).

7. The clamping system in accordance with any of the preceding claims, **characterized in that** the ejector (130) exhibits a continuous flange (136) on an end of the ejector lying in the ejection direction.

8. The clamping system in accordance with claim 7, **characterized in that** the flange (136) is configured to be inserted into a front-end receiving opening (119) formed in the main body (110) when the two clamping bodies (120) are activated in the direction of the clamping position, and retracted from the front-end receiving opening (119) by the defined ejection stroke when the two clamping bodies (120) are activated in the direction of the release position.

9. The clamping system in accordance with any of the preceding claims, **characterized by** a coolant/lubricant feeder tube (140) which is combined with the ejector (130).

10. The clamping system in accordance with claim 9, **characterized in that** the coolant/lubricant feeder tube (140) is formed to be a single piece with the ejector (130).

11. The clamping system in accordance with claim 9, **characterized in that** the coolant/lubricant feeder tube (140) is connected to form a manageable single piece with the injector (130).

12. The clamping system in accordance with any of the preceding claims, **characterized in that** the ejector (130) at its face pointing in the pressing direction exhibits a tool holding recess (132) for accommodating a corresponding tool.

## Revendications

1. Système de serrage pour la liaison détachable de deux parties de préférence symétriques en rotation (1, 3), dont une partie (1) présente un arbre creux (2) de préférence cylindrique ou conique et l'autre partie (3) présente une section de réception (4) pour la réception en ajustement précis de l'arbre creux (2) avec :
un corps de base (110) à agencer concentriquement dans la section de réception (4) de l'autre partie (3) qui s'étend dans l'état assemblé l'une avec l'autre des deux parties (1, 3) dans l'arbre creux (2) d'une partie (1) et porte deux corps de serrage (120, 120) qui sont actionnables en sens diamétralement inverse entre une position de détachement et une position de serrage, et
un éjecteur (130) maintenu de manière réglable axialement d'une course d'éjection définie dans un perçage débouchant (114) central dans le corps de base (110),
dans lequel les deux corps de serrage (120, 120) sollicitent dans la position de serrage l'une partie (1) avec une force de pressage agissant dans un sens de pressage vers l'autre partie (3) et sollicitent dans la position de détachement l'une partie (1) par le biais de l'éjecteur (130) avec une force d'éjection agissant dans un sens d'éjection loin de l'autre partie (3), et
dans lequel l'éjecteur (130) est formé à partir d'un corps de rotation qui présente un flanc cunéiforme (131) tournant dirigé dans le sens de pressage, sur lequel les deux corps de serrage (120) montent lors d'un actionnement en direction de la position de détachement, **caractérisé en ce que**
le corps de rotation formant l'éjecteur (130) est ancré de manière détachable directement par complémentarité de formes avec un jeu axial correspondant à la course d'éjection définie dans un perçage débouchant (114) central réalisé dans le corps de base (110).

2. Système de serrage selon la revendication 1, **caractérisé en ce que** l'éjecteur (130) est formé à partir d'un corps de douille.

3. Système de serrage selon la revendication 1 ou 2, **caractérisé en ce que** l'éjecteur (130) est ancré comme une fermeture à baïonnette dans le corps de base (110).

4. Système de serrage selon la revendication 3, **caractérisé en ce que**
l'éjecteur (130) présente dans le sens de pressage un prolongement axial (133) qui est formé à partir d'une section de nervure (134) obtenue par enlèvement de deux sections du corps de rotation en forme de segment de cercle dans une vue en élévation axiale, et
la section de nervure (134) présente deux rainures (135) en regard diamétralement qui peuvent être amenées en engagement avec des saillies radiales (118) agencées en regard diamétralement, prévues dans le perçage débouchant central (114).

5. Système de serrage selon la revendication 4, **caractérisé en ce que** les rainures (135) sont configurées sur la section de nervure (134) dans le sens axial avec une dimension précisément si grande que les saillies radiales (118) dans le perçage débouchant (113) central dans les rainures (135) sont reçues avec un jeu axial correspondant à la course d'éjection définie.

6. Système de serrage selon l'une des revendications précédentes, **caractérisé en ce que**
les deux corps de serrage (120) sont reçus par complémentarité de formes dans deux évidements (116) en regard diamétralement dans le corps de base (110) et
les deux évidements (116) s'étendent radialement vers l'intérieur jusqu'à ce qu'ils dégagent le perçage débouchant central (114).

7. Système de serrage selon l'une des revendications précédentes, **caractérisé en ce que** l'éjecteur (130) présente une bride tournante (136) sur son extrémité se trouvant dans le sens d'éjection.

8. Système de serrage selon la revendication 7, **caractérisé en ce que** la bride (136) est configurée de sorte qu'elle s'enfonce lors d'un actionnement des deux corps de serrage (120) en direction de la position de serrage dans une ouverture de réception (119) côté avant réalisée dans le corps de base (130) et sort lors d'un actionnement des deux corps de serrage (120) en direction de la position de détachement, de la course d'éjection définie, hors de l'ouverture de réception côté avant (119).

9. Système de serrage selon l'une des revendications précédentes, **caractérisé par** un tube d'amenée de réfrigérant et de lubrifiant combiné (140) à l'éjecteur (130).

10. Système de serrage selon la revendication 9, **caractérisé en ce que** le tube d'amenée de réfrigérant et de lubrifiant (140) est réalisé d'un seul tenant avec l'éjecteur (130).

11. Système de serrage selon la revendication 9, **caractérisé en ce que** le tube d'amenée de réfrigérant et de lubrifiant (140) est relié de manière manipulable d'un seul tenant à l'éjecteur (130).

12. Système de serrage selon l'une des revendications précédentes, **caractérisé en ce que** l'éjecteur (130) présente, sur son côté avant dirigé dans le sens de pressage, un évidement de réception d'outil (132) pour la réception d'un outil correspondant.
